# FASCICULE DE BREVET EUROPEEN

(11) **EP 3 830 346 B1**
(45) Date de publication et mention de la délivrance du brevet: **11.10.2023**
(21) Numéro de dépôt: 19713115.4
(22) Date de dépôt: 12.03.2019
(51) Int. Cl.: E02D 7/06, E02D 7/18, E02D 13/04, E02D 15/08, E02D 15/10, E02D 27/42

(54) **PROCÉDÉ D'INSTALLATION D'UN PIEU MÉTALLIQUE TUBULAIRE DANS UN SOL ROCHEUX**
VERFAHREN ZUM EINBRINGEN EINES ROHRPFAHLS AUS METALL IN EINEN FESTEN UNTERGRUND
METHOD OF INSTALLING A TUBULAR METAL PILE IN A HARD GROUND

(30) Priorité: 30.07.2018 FR 1857066
(43) Date de publication de la demande: 09.06.2021
(73) Titulaire: SAIPEM S.A., 78180 Montigny Le Bretonneux (FR)
(72) Inventeur: JEAN, Olivier, 78610 LE PERRAY EN YVELINES (FR); VAMBRE, Olivier, 78130 LES MUREAUX (FR)
(74) Mandataire: Cabinet Beau de Loménie
(86) Numéro de dépôt international: PCT/FR2019/050534
(87) Numéro de publication internationale: WO 2020/025864

(56) Documents cités:
- EP-A1- 2 650 446
- FR-A- 650 485
- GB-A- 2 469 190
- JP-A- 2004 239 063
- JP-A- 2008 297 856

## Description

### Arrière-plan de l'invention

La présente invention se rapporte au domaine général de l'installation de pieux métalliques dans un sol rocheux, notamment en mer dans un fond marin rocheux.

Un domaine d'application de l'invention est celui de la mise en place des fondations d'un champ d'éoliennes offshore, cf. par exemple le document EP 2 650 446 A.

Une éolienne offshore est installée en mer au moyen d'une fondation constituée par un mono-pieu métallique tubulaire de très grand diamètre, typiquement de l'ordre de 7 à 8m de diamètre, qui est enfiché d'une trentaine de mètres de profondeur dans un fond marin rocheux.

Généralement, l'installation d'un tel pieu consiste essentiellement à forer le fond marin rocheux un trou de diamètre et de profondeur donnés pour y installer le pieu. Ce forage est réalisé à partir d'une barge supportant un atelier de forage et de cimentation. Du ciment est ensuite coulé dans le trou pour sceller le pieu dans le trou. Lorsque la capacité portante du pieu ainsi installé est assurée par la tenue du ciment, le pieu est relâché pour pouvoir déplacer la barge portant l'atelier de forage et de cimentation jusqu'à l'emplacement de l'éolienne suivante.

Cette technique de mise en place des fondations d'un champ d'éoliennes offshore présente cependant de nombreux inconvénients. En particulier, le forage du trou et la mise en place du pieu dans celui-ci entraîne un risque d'instabilité des parois du trou. Par ailleurs, cette technique engendre une surconsommation de ciment lors du scellement du pieu dans le fond marin. De plus, les propriétés du ciment ont tendance à se dégrader en milieu marin et sous les conditions cycliques des efforts de houle et de vent sur le pieu. En outre, cette technique nécessite d'assurer la verticalité et la tenue du pieu pendant son scellement, ce qui requiert des outillages conséquents et du temps.

### Objet et résumé de l'invention

La présente invention a donc pour but principal de proposer un procédé d'installation d'un pieu métallique qui ne présente pas de tels inconvénients.

Conformément à l'invention, ce but est atteint grâce à un procédé d'installation d'un pieu métallique tubulaire dans un sol rocheux, comprenant le forage du sol rocheux pour former une cavité de diamètre et de profondeur prédéterminés, puis le remplissage de la cavité par un matériau granulaire, ensuite l'arrangement du matériau granulaire présent dans la cavité par vibration, et l'installation du pieu dans la cavité.

Le procédé d'installation selon l'invention est remarquable en ce qu'il prévoit de substituer le sol rocheux par un matériau granulaire (par exemple du sable) dont les caractéristiques mécaniques sont ensuite améliorées au cours de l'étape d'arrangement. Le pieu est alors installé dans la cavité remplie de ce matériau granulaire. Dans la méthode illustrée dans EP 2 650 446 A, le matériau de remplissage est injecté au fur et à mesure de l'avancement du pieu dans la cavité.

Le procédé selon l'invention présente ainsi de nombreux avantages. En particulier :
- la maîtrise du risque d'instabilité des parois du trou par le remplissage de ce dernier d'un matériau granulaire dont les caractéristiques mécaniques sont ensuite améliorées ;
- la suppression du scellement du pieu par du ciment, ce qui élimine les inconvénients inhérents à ce type de scellement (en particulier la suppression du temps de prise et des risques de dégradation des caractéristiques du ciment dans le temps) ;

Le procédé selon l'invention présente donc une meilleure fiabilité, un gain majeur de temps par rapport aux procédés d'installation de l'art antérieur et une flexibilité de plusieurs ateliers d'installation en simultané.

Le procédé selon l'invention pourra être utilisé dans des sols rocheux, soit en milieu aquatique (par exemple pour l'installation de fondations d'éoliennes offshore), soit en milieu terrestre (par exemple pour l'installation de mâts de télécommunication, d'éoliennes terrestres, de support/pylône de réseau électrique, de pylône de téléphérique, etc.).

L'arrangement du matériau granulaire dans la cavité peut être réalisé pendant l'installation du pieu. Alternativement, l'arrangement du matériau granulaire dans la cavité peut être réalisé avant l'installation du pieu. Dans ce cas, l'arrangement du matériau granulaire dans la cavité est réalisé par vibro-compactage ou par compactage dynamique.

Le pieu peut être installé par vibro-fonçage dans la cavité remplie par le matériau granulaire. Alternativement, le pieu peut être installé par battage dans la cavité remplie par le matériau granulaire.

De préférence, l'installation du pieu dans la cavité comprend successivement la mise en place d'un guidage, l'insertion verticale du pieu au travers de ce guidage, et la mise en place du pieu dans la cavité.

De préférence également, le matériau granulaire provient du matériau issu du forage du sol rocheux.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1A à 1F illustrent de façon schématique différentes étapes successives de la phase de forage selon le procédé conforme à l'invention ;
- les figures 2A à 2F illustrent de façon schématique différentes étapes successives des phases de remplissage et d'arrangement du matériau granulaire selon le procédé conforme à l'invention ; et
- les figures 3A à 3D illustrent de façon schématique différentes étapes successives de la phase d'installation du pieu selon le procédé conforme à l'invention.

### Description détaillée de l'invention

Le procédé selon l'invention comprend trois étapes principales, à savoir une étape principale de forage d'une cavité, une étape principale de remplissage et d'arrangement de la cavité, et une étape principale d'installation proprement dite du pieu dans la cavité.

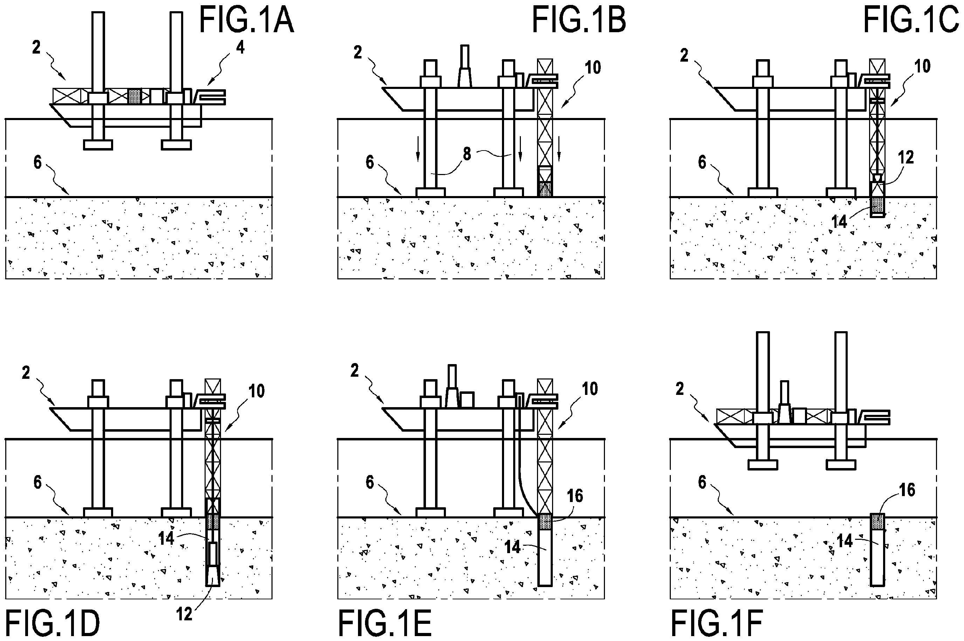

Les figures 1A à 1F représentent de façon schématique différentes séquences successives d'un exemple de mise en oeuvre de l'étape principale de forage d'une cavité.

Dans cet exemple de réalisation, le pieu métallique tubulaire est installé en mer dans un fond marin rocheux (il peut s'agir par exemple d'un pieu de fondation d'une éolienne offshore). Bien entendu, les étapes du procédé selon l'invention s'appliquent également à l'installation terrestre d'un pieu métallique tubulaire dans un sol rocheux.

Au cours d'une première séquence (figure 1A), une plateforme 2 supportant un atelier de forage 4 est amenée à la verticale du fond marin rocheux 6.

La plateforme 2 est du type autoélévatrice (« jack-up » en anglais), c'est-à-dire qu'elle comprend des jambes 8 qui viennent prendre appui sur le fond marin rocheux 6 pour permettre d'élever la plateforme 2 au-dessus du niveau de la mer. Une tour 10 de l'atelier de forage est alors descendue (figure 1B).

Une tête de forage 12 est ensuite descendue dans la tour 10 et le forage du fond marin rocheux 6 pour former une cavité 14 de diamètre et de profondeur prédéterminés débute (étape 1C).

La figure 1D représente la fin de l'opération de forage proprement dite : la cavité 14 est à ses dimensions (diamètre et profondeur) finales, c'est-à-dire que le diamètre et profondeur de la cavité qui est forée sont supérieurs respectivement au diamètre et à la profondeur finale d'enfouissement du pieu. Par exemple, dans le cas d'une application à l'installation d'une fondation mono-pieu d'éolienne offshore, la cavité peut présenter un diamètre de 7 à 8m pour une profondeur de 25 à 35 m.

Au cours de la séquence suivante (figure 1E), la tête de forage 12 est remontée à bord de la plateforme et un guide annulaire 16 est montée à l'extrémité supérieure de la cavité 14. Un tel guide est un équipement fonctionnel qui aura pour fonction de stabiliser la partie supérieure de la cavité si nécessaire et de guider les opérations de remplissage et de mise en place du pieu.

Enfin, la tour 10 de l'atelier de forage peut être remontée, les jambes 8 relevées (figure 1F) et la plateforme 2 est acheminée vers un autre chantier d'installation d'un pieu.

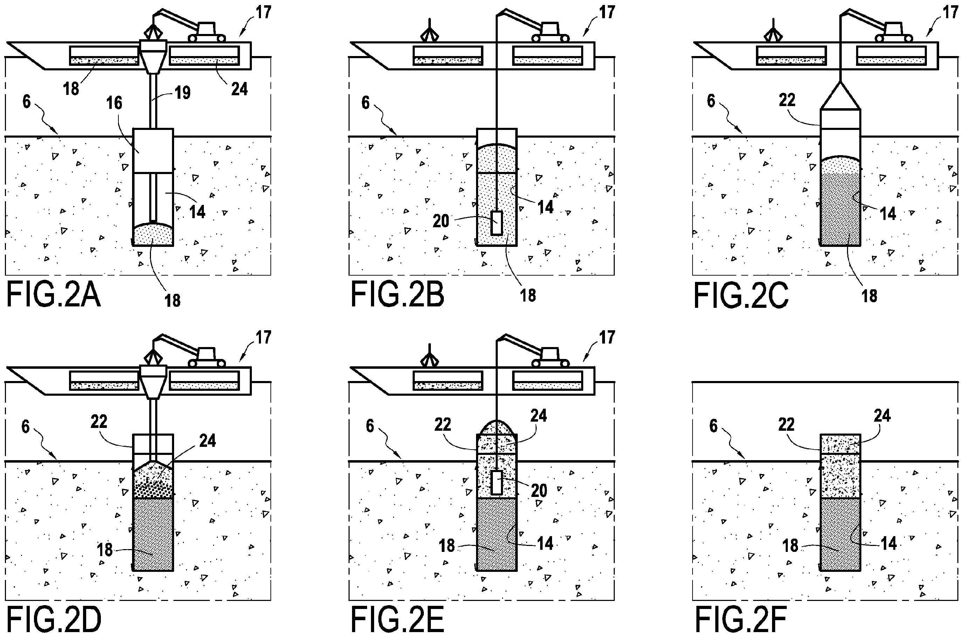

Les figures 2A à 2F représentent de façon schématique différentes séquences successives d'un exemple de mise en oeuvre de l'étape principale de remplissage et d'arrangement de la cavité précédemment formée.

Cette étape nécessite la mise en place au-dessus de la cavité 14 d'un navire 17 de transport de matériau granulaire 18. Ce matériau granulaire peut être par exemple du sable importé ou provenir directement du matériau issu du forage du sol rocheux, auquel cas il peut avoir subi un traitement préalable.

Au cours d'une première séquence (figure 2A), le navire 17 déverse à l'intérieur de la cavité 14 le matériau granulaire 18 transporté (ou reconditionné et stocké dans le navire 17 si c'est le matériau de forage). Cette opération est par exemple réalisée grâce à un conduit 19 reliant le fond de la cavité au navire.

Une fois la cavité quasiment entièrement remplie par le matériau granulaire, le conduit 19 est remonté à bord du navire et il est procédé à un arrangement de ce matériau granulaire (figure 2B). Par exemple, cet arrangement est réalisé par un vibro-compactage ou un compactage dynamique du matériau granulaire.

Le vibro-compactage est une technique connue pour générer un arrangement du matériau granulaire ayant rempli la cavité. Cette méthode est un traitement de masse qui consiste à plonger un vibreur 20 (ou aiguille vibrante) dans la cavité remplie de matériau granulaire pour émettre des vibrations afin de réarranger les grains dans le but de densifier le matériau ayant rempli la cavité.

Le compactage dynamique (non représenté sur les figures) est une autre technique connue pour générer un tassement du matériau granulaire présent dans la cavité sous l'effet de l'apport de hautes énergies. Typiquement, pour créer des ondes de hautes énergies dans la cavité, une masse de plusieurs tonnes qui est lâchée plusieurs fois sur le matériau granulaire.

Une fois l'opération d'arrangement terminée, la hauteur de matériau granulaire présent dans la cavité 14 est plus faible qu'avant cette opération.

Au cours de la séquence suivante (figure 2C), un entonnoir 22 est installé à l'extrémité supérieur de la cavité 14 pour aider au remplissage du reste de celle-ci par un autre matériau granulaire, par exemple du gravier 24 (figure 2D).

Le gravier 24 subit ensuite une opération d'arrangement comme décrit précédemment (vibro-compactage ou compactage dynamique), par exemple au moyen d'un vibreur 20 comme représenté sur la figure 2E. Le gravier sur la partie supérieure de la cavité est un matériau plus drainant pour permettre à l'eau de circuler plus facilement par « effet de drainage ». A l'issue de cette séquence, la hauteur de gravier 24 présent dans la partie supérieure de la cavité 14 est plus faible qu'avant cette opération et le navire 17 peut alors être déplacé vers un autre chantier d'installation d'un pieu (figure 2F).

On notera que la séquence d'arrangement du matériau granulaire dans la cavité peut être réalisée avant (comme décrit ci-dessus) ou pendant l'étape d'installation du pieu décrite ci-après.

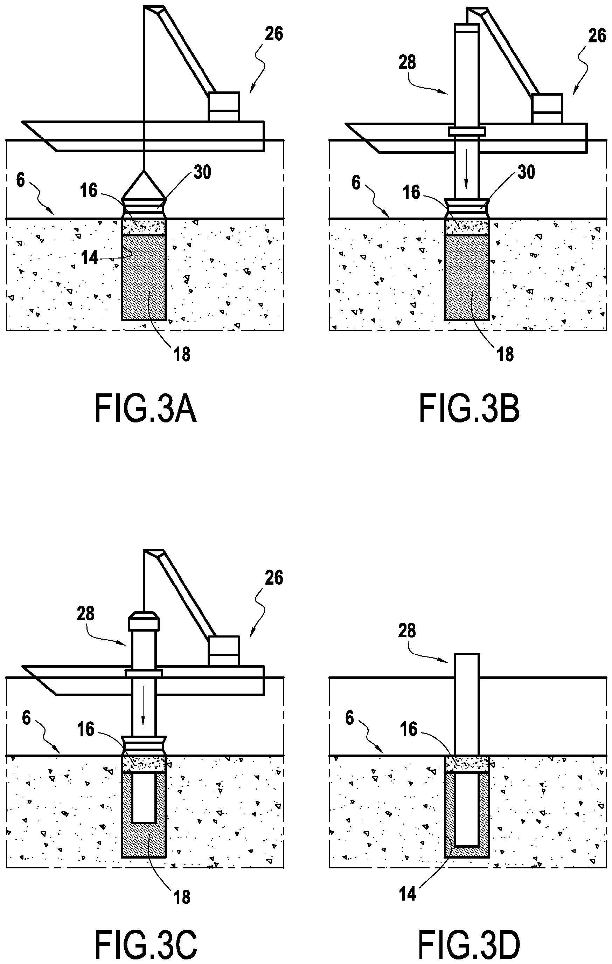

Les figures 3A à 3D représentent de façon schématique différentes séquences successives d'un exemple de mise en oeuvre de l'étape principale d'installation proprement dite du pieu dans la cavité précédemment formée et arrangée.

Cette étape nécessite la mise en place au-dessus de la cavité 14 d'un navire 26 d'installation du pieu métallique, tubulaire, et creux 28 (le navire de transport de matériau granulaire ayant été préalablement acheminé vers un autre chantier).

Une première séquence peut consister à installer un guidage 30 au niveau de l'extrémité supérieure de la cavité 14 (figure 3A). Ce guidage 30 sert à guider le pieu lors de son installation.

Le pieu métallique tubulaire et creux 28 est alors inséré dans la cavité (figure 3B) et guidé verticalement (figure 3C) pour pénétrer dans celle-ci sur une profondeur prédéterminée. Le pieu étant creux, le matériau granulaire présent dans la cavité vient se loger à la fois entre le pieu et la cavité et à l'intérieur du pieu.

L'insertion du pieu dans la cavité remplie de matériau granulaire arrangé est réalisée par vibro-fonçage ou par battage. Le vibro-fonçage est une technique connue dans le domaine du bâtiment et travaux publics pour enfoncer des pieux par vibration à fréquence élevée et faible amplitude. Quant au battage, il s'agit d'une autre technique connue consistant à enfoncer un pieu dans le sol par effet dynamique de chocs ou de vibrations. Les chocs sont généralement obtenus par la chute du mouton sur un casque de battage et les vibrations par un disposition appelée vibrateur ou trépideur.

L'insertion du pieu est alors stoppée une fois atteinte la profondeur d'insertion souhaitée et le navire 26 est déplacé vers un autre chantier d'installation d'un pieu (figure 3D).

## Revendications

1. Procédé d'installation d'un pieu métallique tubulaire (28) dans un sol rocheux, comprenant :
le forage du sol rocheux (6) pour former une cavité (14) de diamètre et de profondeur prédéterminés ;
puis le remplissage de la cavité par un matériau granulaire (18) ;
ensuite l'arrangement du matériau granulaire présent dans la cavité par vibration ; et
l'installation du pieu dans la cavité.

2. Procédé selon la revendication 1, dans lequel le pieu est installé en mer dans un fond marin rocheux.

3. Procédé selon la revendication 1, dans lequel le pieu est installé à terre dans un sol rocheux.

4. Procédé selon l'une quelconque des revendications 1 à 3, dans lequel l'arrangement du matériau granulaire dans la cavité est réalisé pendant l'installation du pieu.

5. Procédé selon l'une quelconque des revendications 1 à 3, dans lequel l'arrangement du matériau granulaire dans la cavité est réalisé avant l'installation du pieu.

6. Procédé selon la revendication 5, dans lequel l'arrangement du matériau granulaire dans la cavité est réalisé par vibro-compactage.

7. Procédé selon la revendication 5, dans lequel l'arrangement du matériau granulaire dans la cavité est réalisé par compactage dynamique.

8. Procédé selon l'une quelconque des revendications 1 à 7, dans lequel le pieu est installé par vibro-fonçage dans la cavité remplie par le matériau granulaire.

9. Procédé selon l'une quelconque des revendications 1 à 7, dans lequel le pieu est installé par battage dans la cavité remplie par le matériau granulaire.

10. Procédé selon l'une quelconque des revendications 1 à 9, dans lequel l'installation du pieu dans la cavité comprend successivement la mise en place d'un guidage (30), l'insertion verticale du pieu au travers de ce guidage, et la mise en place du pieu dans la cavité.

11. Procédé selon l'une quelconque des revendications 1 à 10, dans lequel le matériau granulaire provient du matériau issu du forage du sol rocheux.

## Patentansprüche

1. Verfahren zum Einbringen eines Rohrpfahls (28) aus Metall in einen felsigen Untergrund, umfassend:
Bohren des felsigen Untergrunds (6), um einen Hohlraum (14) mit bestimmtem Durchmesser und bestimmter Tiefe zu bilden,
dann Füllen des Hohlraums mit einem körnigen Material (18),
dann Anordnen des in dem Hohlraum vorhandenen körnigen Materials durch Vibration, und
Einbringen des Pfahls in den Hohlraum.

2. Verfahren nach Anspruch 1, wobei der Pfahl im Meer in einen felsigen Meeresboden eingebracht wird.

3. Verfahren nach Anspruch 1, wobei der Pfahl an Land in einen felsigen Boden eingebracht wird.

4. Verfahren nach einem der Ansprüche 1 bis 3, wobei das Anordnen des körnigen Materials in dem Hohlraum während des Einbringens des Pfahls ausgeführt wird.

5. Verfahren nach einem der Ansprüche 1 bis 3, wobei das Anordnen des körnigen Materials in dem Hohlraum vor dem Einbringen des Pfahls ausgeführt wird.

6. Verfahren nach Anspruch 5, wobei das Anordnen des körnigen Materials in dem Hohlraum durch Vibrationsverdichtung ausgeführt wird.

7. Verfahren nach Anspruch 5, wobei das Anordnen des körnigen Materials in dem Hohlraum durch dynamische Verdichtung ausgeführt wird.

8. Verfahren nach einem der Ansprüche 1 bis 7, wobei der Pfahl durch Einvibrieren in den mit dem körnigen Material gefüllten Hohlraum eingebracht wird.

9. Verfahren nach einem der Ansprüche 1 bis 7, wobei der Pfahl durch Einrammen in den mit dem körnigen Material gefüllten Hohlraum eingebracht wird.

10. Verfahren nach einem der Ansprüche 1 bis 9, wobei das Einbringen des Pfahls in den Hohlraum aufeinanderfolgend das Einrichten einer Führung (30), das vertikale Einsetzen des Pfahls durch diese Führung und das Einrichten des Pfahls in dem Hohlraum umfasst.

11. Verfahren nach einem der Ansprüche 1 bis 10, wobei das körnige Material von dem Material kommt, das vom Bohren des felsigen Untergrunds stammt.

## Claims

1. A method for installing a tubular metal pile (28) in a rocky ground, comprising:
drilling the rocky ground (6) in order to form a cavity (14) of predetermined diameter and depth;
then filling the cavity with a granular material (18);
then arranging the granular material present in the cavity by vibration; and
installing the pile in the cavity.

2. The method according to claim 1, wherein the pile is installed at sea in a rocky seabed.

3. The method according to claim 1, wherein the pile is installed onshore in a rocky ground.

4. The method according to any one of claims 1 to 3, wherein the arrangement of the granular material in the cavity is achieved during the installation of the pile.

5. The method according to any one of claims 1 to 3, wherein the arrangement of the granular material in the cavity is achieved prior to the installation of the pile.

6. The method according to claim 5, wherein the arrangement of the granular material in the cavity is achieved by vibro-compaction.

7. The method according to claim 5, wherein the arrangement of the granular material in the cavity is achieved by dynamic compaction.

8. The method according to any one of claims 1 to 7, wherein the pile is installed by vibro-sinking into the cavity filled with the granular material.

9. The method according to any one of claims 1 to 7, wherein the pile is installed by driving into the cavity filled with the granular material.

10. The method according to any one of claims 1 to 9, wherein installing the pile in the cavity successively comprises placing a guide (30), vertically inserting the pile through this guide, and placing the pile in the cavity.

11. The method according to any one of claims 1 to 10, wherein the granular material comes from the material obtained from the drilling of the rocky ground.
